# EUROPEAN PATENT SPECIFICATION

(11) **EP 2 219 471 B1**
(45) Date of publication and mention of the grant of the patent: **10.06.2015**
(21) Application number: 08857508.9
(22) Date of filing: 04.12.2008
(51) Int. Cl.: A23L 1/00, A23L 1/10, A23L 1/182, A23P 1/08, A23L 1/308

(54) **FIBRE ENRICHED, PROTEIN COATED CEREAL PRODUCTS**
BALLASTSTOFFANGEREICHERTE, PROTEINBESCHICHTETE GETREIDEPRODUKTE
PRODUITS À BASE DE CÉRÉALES ENROBÉS DE PROTÉINES ET ENRICHIS EN FIBRES

(30) Priority: 05.12.2007 GB 0723812
(43) Date of publication of application: 25.08.2010
(73) Proprietor: Mars, Incorporated, McLean, VA 22101 (US)
(72) Inventor: VERBIEST, Edwin, B-2250 Olen (BE); LIE, Fang, Lan, B-2250 Olen (BE); VAN BYLEN, Ludo, B-2250 Olen (BE); JACOPS, Luc, B-2250 Olen (BE); BAKELANTS, Tania, B-2250 Olen (BE)
(74) Representative: Cockerton, Bruce Roger
(86) International application number: PCT/IB2008/003671
(87) International publication number: WO 2009/071992

(56) References cited:
- WO-A-01/10244
- WO-A-03/092408
- JP-A- 2000 245 364
- JP-A- 2004 313 090
- JP-A- 2004 321 014
- KR-A- 20040 062 704
- DATABASE WPI Week 200676 Thomson Scientific, London, GB; AN 2006-738869 XP002523028 -& KR 2006 006 568 A (KANGWON PROVINCE) 19 January 2006 (2006-01-19)
- HUFFMAN L M: "PROCESSING WHEY PROTEIN FOR USE AS A FOOD INGREDIENT" FOOD TECHNOLOGY, INSTITUTE OF FOOD TECHNOLOGISTS, CHICAGO, IL, US, vol. 50, no. 2, 1 February 1996 (1996-02-01), pages 49-52, XP000557501 ISSN: 0015-6639 cited in the application

## Description

The present invention relates to fiber-enriched cereal products, and to processes for the preparation of such products.

Most of the nutrients of whole cereal grains such as rice and wheat are found in the outer layer or kernel (i.e., the bran). Typically the bran (along with its fiber and nutrients) is removed by milling before using the cereal grains to prepare commercial food products. Such milled cereal grains generally contain less than about 1 percent total dietary fiber (including soluble and insoluble fiber). Thus, milled cereal grains are typically not good sources of fiber.

Unmilled rice (brown rice) is a richer source of nutrients compared to milled white rice. In particular, brown rice contains high levels of dietary fiber, vitamin Bs and vitamin E. Unfortunately, the intact bran layer of brown rice prevents heat permeation and water absorption when brown rice is cooked at normal cooking times (e.g. 10 to 20 minutes), as a result of which starch does not gelatinize sufficiently, and the outer layer structure does not soften or break down sufficiently. For these reasons, brown rice cooked at normal cooking times is hard and dry, and is therefore considerably less palatable compared to polished white rice after cooking. To resolve these drawbacks, brown rice is commonly cooked for longer times (e.g. 20 to 40 minutes). However, longer cooking times cause vitamins and certain other nutrients vulnerable to high temperatures to partially break down, and heating until the outer layer of brown rice becomes soft causes other parts of rice to gelatinize. As a result, it has been difficult to produce high-quality brown rice that has good mouth feel and appearance after cooking.

There is therefore a need for products and processes that combine the nutritional advantages of unmilled cereal grains such as brown rice, with the palatability of milled cereal grains such as white rice.

US-A-2007054029 describes a process in which a partially hydrated milled rice is mixed with a soluble fiber to form a homogenous mixture of the partially cooked rice and soluble fiber. The homogenous mixture is then further cooked to complete hydration of the rice to obtain a cooked rice with a moisture content of about 28 to about 42 percent which is infused with the soluble fiber. The fiber-infused rice is then dried.

JP-A-2004321014 describes coating rice in a rotating drum coater with soluble fibre and/or other water-soluble nutrient components

JP-A-2000245364 describes a rice grain coated with a bran-containing coating. The grains are mixed in a bran-containing solution and subsequently dried. Upon cooking, the bran coating may quickly separate from the grain because the bran is soluble. Consequently, coating a grain with an amount of bran higher than the disclosed amount would appear to be fruitless as the coating would simply separate from the rice grain during cooking.

JP-A-2003061595 further developed a method to coat rice grains with saccharified bran. Prior to coating, bran is enzymatically saccharified to produce a viscous solution that may be coated onto the rice grain. Even with this technique, however, concentrations of only 2% (by weight) of saccharified bran are disclosed as being coated onto rice grains. Furthermore, the coating material does not include fiber and it contains only enzymatically altered bran.

KR-A-20040062704 describes coating rice with a dietary fibre by wetting the rice, followed by applying the dietary fibre to the wet rice.

All of the above prior art fiber-enriched products suffer from the drawback that the dietary fiber is substantially extracted from the fiber-enriched rice during conventional cooking in excess water.

WO-A-2006076781 describes coating food substrates with individually apparent particles of added ingredients, wherein the particles are bonded to the substrate by a transparent film of protein and/or starch and/or gelatin. The substrate may include rice or precooked wheat. There is no mention of coating with dietary fiber, and no mention of the cooking properties of the products.

JP-A-2004313090 also describes coating a water-soluble dietary fibre on to rice. There does not appear to be any disclosure of coating with bran.

KR-A-20060006568 describes coating rice with a mixture of a pine needle concentrate and a dietary fiber, followed by drying.

WO03/092408 describes the use of films of gel-forming proteins to attach particles to the surface of food products, in particular baked goods.

US-A-5705207 and US-A-6174559 describe the use of gluten film coatings on edible substrates. The films can be used to attach edible particles to the edible substrates.

US-A-4765996 describes coating rice successively with a layer of nutrients, a layer of gelatin, and a layer of starch.

WO03/092408 describes a protein glaze for adhering particles to e.g. baked goods. Likewise, L.M. Huffinann in Food Technology Vol. 50(2), pages 49-52 (1996) mentions that whey protein can be used as an adhesive, for example to adhere breadcrumbs or batters to meat and fish, and to fix glazes to the surface of baked products.

In a first aspect, the present invention provides a cereal product comprising cereal kernels, wherein the cereal kernels have been at least partially milled and are coated with a coating layer characterised in that said coating layer comprises a protein matrix comprising whey protein having particles of a dietary fiber ingredient dispersed therein, and said dietary fiber ingredient comprises powdered cereal bran.

In a second aspect, the present invention provides a method of making a fiber-enriched dry cereal product comprising the steps of: coating cereal kernels that have been at least partially milled with particles of a powdered cereal bran and an aqueous dispersion containing a whey protein; followed by drying the coated cereal kernels.

It has been found that leaching of the added dietary fiber under normal cooking conditions is substantially prevented by binding the dietary fiber in a protein coating layer. The invention thereby enables the formulation of a wide range of fiber-enriched and otherwise nutritionally enriched milled cereal products. Nutritional properties can thereby be optimised whilst retaining at least some of the advantageous cooking, taste and mouthfeel advantages of milled cereal grains.

Suitably, the amount of protein in the coating layer is from 0.5wt.% to 5wt.%, based on the dry weight of the coated cereal kernels, for example from 1wt.% to 3wt.%.

The milled cereal kernels are suitably rice or wheat kernels. Preferably, the cereal kernels are rice kernels. The cereal kernels may optionally be parboiled or partially parboiled. That is to say, the kernels may have undergone treatment with water and heat in any of the conventional parboiling processes to at least partially gelatinize the starch therein, followed by drying. Suitably, the kernels are parboiled. Preferably, the milled cereal kernels comprise or consist essentially of milled rice kernels. The kernels are preferably substantially whole kernels, but may also comprise broken kernels, such as cracked wheat kernels. The term "at least partially milled" refers to kernels having part or all of the naturally occurring bran layer removed therefrom by milling. Suitably, at least about 50% of the naturally occurring bran layer has been removed by milling, more suitably substantially all of the naturally occurring bran layer has been removed by milling to give substantially milled kernels.

The coating layer contains the dietary fiber ingredient dispersed uniformly therein. The term "dietary fiber ingredient" refers to a food ingredient that is rich in dietary fiber. Suitably, the ingredient contains at least about 5wt% dietary fiber, more suitably at least 10% or 20% dietary fiber, by weight. The dietary fiber ingredient may comprise soluble dietary fiber and/or insoluble dietary fiber. Suitably, the dietary fiber ingredient may comprise or consist essentially of a powdered ingredient, that is to say an ingredient having a maximum particle (sieve) size less than about 200 micrometers, preferably less than about 100 micrometers, for example less than about 50 micrometers.

The preferred dietary fiber ingredient comprises or consists essentially of powdered bran. The bran may be derived from the same cereal as the kernels, and/or it may be from another species. Suitable bran may include wheat, barley, oat, corn, sorghum, millet, psyllium and rice bran. Preferably, the coating composition comprises bran removed from the kernels in the milling process.

Bran feed stock may be stabilized using various methods known to one skilled in the art. Suitable methods to stabilize bran include heat stabilization through extrusion cooking and acid stabilization. The use of stabilized bran in the coating provides for longer shelf life of the finished product compared to non-stabilized bran. To the stabilized bran, additives may be added to enhance certain characteristics. These additives may include acids to control pH, antioxidants, and bleaching agents. Suitable acids include citric acid, adipic acid, ascorbic acid, malic acid, acetic acid, and mixtures thereof. Antioxidants may be added to the bran to reduce oxidation of the coating and/or the rice grain. Suitable antioxidants may include citric acid, adipic acid, ascorbic acid, malic acid, acetic acid, tocopherol, rosemary extract or combinations thereof. Bleaching agents may be added to lighten the color of the bran. In one embodiment, an FDA food - acceptable bleaching agent is added to the bran. Suitable FDA food - acceptable bleaching agents may include ozone, chlorine, a peroxide, or an enzyme capable of increasing the whiteness index. Preferably the whiteness index of the bran is at least about 55.

In other embodiments, the dietary fiber ingredient may be obtained from other vegetable sources such as dried, powdered sugar beet pulp. In the case of coated rice products, the dietary fiber ingredient preferably comprises or consists essentially of powdered rice bran. In any case, the particle size of the dietary fiber ingredient is preferably sufficiently small that individual particles are not detectable by the unaided human eye. As a result, the coating on the kernels has a uniform appearance which may be lightly colored, for example a light tan color.

The dietary fiber ingredient (e.g. bran) is typically present in the coating in an amount of from 3wt% to 10wt.% based on the dry weight of the coated product, for example from 4wt.% to 8wt.%.

The fiber content of a fully milled uncoated rice kernel is typically about 1wt.%. The dietary fiber content of bran is typically about 20% to about 30%. Accordingly the total dietary fiber content of the rice product according to the present invention is suitably from 1.6wt.% to 4wt.%, for example from 1.8wt.% to 3.4wt.%. For comparison, the fiber content of unmilled brown rice is typically about 3.2%. The fiber content is the total soluble and insoluble fiber content as determined by AOAC Official Method 991.43 (32.1.17), enzymatic-gravimetric method, MES-TRIS buffer.

It follows that the mean thickness of the coating on the kernels is typically from about 5 micrometers to about 100 micrometers, for example from about 10 micrometers to about 50 micrometers.

The cereal products according to the invention are preferably dry cereal products, and may be packaged dry cereal products. The term "dry cereal product" refers to a product that has been dried to microbiological stability, i.e. the cereal product has a total moisture content of from 8wt.% to 15wt.%, for example from 10wt.% to 14wt.%.

The coating mixture may comprise additional enrichment ingredients, such as one or more vitamins and/or minerals. Suitable additional ingredients may include thiamine, riboflavin, niacin, folic acid and iron compounds such as iron orthophosphate. An especially suitable enrichment ingredient is gamma-aminobutyric acid (GABA). GABA occurs naturally in the bran and germ of rice, and is present in increased amounts during germination. GABA may be added to the coating in the products of the present invention, or a bran containing high levels of GABA derived from germinating rice or other cereals may be used to form the coating. In any case, the amount of GABA in the products according to these embodiments of the invention is suitably at least 20mg/kg based on the weight of the product, for example from 50mg/kg to 200mg/kg.

Suitably, the protein can be coagulated by heat, for example by hot water at 90-100°C, whereby the protein is coagulated under normal cooking conditions of the cereal, thereby trapping the dietary fiber and other nutrients such as GABA on the surface of the cereal. Suitably, the protein matrix may consist essentially of whey proteins. For example, the protein matrix may comprise or consist essentially of a whey protein isolate. Mixtures of proteins may also be used. Other suitable food-acceptable proteins for use in the invention may include egg albumin, caseins, gelatins, wheat protein (gluten) and rice protein.

The coating material may additionally comprise one or more starch or modified starch components. Suitably, the amount of starch in the coating material is less than the amount of protein.

The methods according to the present invention suitably start from at least partially milled cereal kernels having initial moisture content less than about 15wt%. Suitably, an initial wetting step is performed by wetting the cereal kernels with water. The kernels are then coated with an aqueous coating dispersion of the protein binder, followed by addition of the fiber with mixing to coat the kernels with the fiber. The protein is dispersed in water to form the coating dispersion. The concentration of the coating dispersion is typically about 10% to about 50% protein, for example from about 20% to about 30% protein. The fiber may be added to the dispersion, but preferably the fiber is coated onto the cereal kernels after application of the protein coating dispersion as described above. The protein dispersion is applied to the cereal kernels in a conventional coating apparatus with mixing, for example by spraying the dispersion in a rotating drum or rotating pan coater, followed by drying with air at temperatures of about 20°C to about 100°C. Multiple layers may be built up by alternating steps of coating with the protein dispersion and bran. For example, two, three or four cycles of coating with the protein dispersion followed by bran may be performed.

Suitably, the methods of the invention are applied to prepare a product according to the invention. Accordingly, any of the features described above in relation to the products may also be applicable in connection with the methods of the invention.

As noted above, it has been found that leaching of the added dietary fiber under normal cooking conditions is substantially prevented by binding the dietary fiber in a protein coating layer. It follows that the products of the present invention are especially suitable for cooking in excess water (as opposed to cooking by total absorption of water).

For example, the products may retain at least about 50%, for example at least about 70% of their dietary fiber content (measured as described herein) when cooked in a two-fold excess (i.e. 300wt% total water based on the weight of the product) of water at 100°C to 150wt.% water uptake, followed by draining.

It follows that the products according to any aspect of the invention are especially suitable for packaging in boil-in-bag formats, since these formats are cooked in excess water.

Accordingly, in a further aspect the present invention provides a sachet formed of liquid-water-permeable sheet material and containing a cereal product according to the present invention as defined above. Suitably, the sachet contains from about 25g to about 250g of the cereal product.

An embodiment of the present invention will now be described further, by way of example.

### Example 1

Parboiled, milled long-grain rice having a moisture content of about 14wt% (1kg) was placed in a rotating-pan coating apparatus and wetted with 50ml of water.

A protein dispersion was prepared by dispersing 17.16g of powdered whey protein isolate (PROLACTA^{®} 80 supplied by Laetalis Industrie) in 52.83g, of water. This dispersion was entirely sprayed onto the rice in the coating pan with mixing. 50g of rice bran (obtained from the milling of the same rice) was then added to the rice with mixing, followed by drying to produce a bran-coated rice.

The product has a uniform color, with no individual particles of bran visible to the naked eye. The appearance is intermediate between those of white rice and brown rice. However, both the cooking properties of the rice and the eating properties of the rice are markedly superior to those of ordinary brown rice. In addition, a large part of the bran is retained on the rice after cooking in excess water (see Procedure 1 below).

### Reference Example 2

The procedure of Example 1 was repeated, but with no addition of the protein dispersion. The rice coated with bran was simply dried.

The resulting coated rice exhibited substantial loss of fiber after cooking in excess water (see Procedure 1 below).

### Reference Example 3

The procedure of Example 1 was repeated, but with replacement of the protein dispersion by a dispersion of a waxy corn starch (N-Tack from National Starch) 4.8g in 11.2g water. N-Tack is indicated as suitable for adhering food pieces.

The resulting coated rice exhibited substantial loss of fiber after cooking in excess water (see Procedure 1 below).

### Procedure 1: Measurement of Fiber Content After Crooking

The total soluble and insoluble fiber content was determined by AOAC Official Method 991.43 (32.1.17), enzymatic-gravimetric method, MES-TRIS buffer. The measurement error is thought to be in the region of 30%. For the cooked rice products, the fiber content in wt.% was determined based on the dry starting material weight to allow direct comparison with the fiber content of the starting material.

Rice products from the above example and reference examples were assessed, together with a sample of conventional (unmilled) brown rice. The samples were cooked in three different ways, as follows. The first cooking method was by total water absorption, i.e. with no excess water other than what is required to hydrate the rice. The second method was by cooking in at least two-fold excess of water in a boil-in bag of the kind described in EP-A-0947444, followed by draining the excess water from the rice. The third method of cooking was by cooking the loose rice in at least two-fold excess of water, followed by draining the excess water from the rice. In each method, the water uptake of the cooked rice was approximately 150% based on the weight of the uncooked rice. The measured fiber contents are given in Table 1.

**Table 1**

| | Wt.% Fibers Uncooked Product | Wt.% Fibers Total Absorption Method | Wt.% Fibers Excess Water Boil-in-Bag | Wt.% Fibers Excess Water Loose Rice |
|---|---|---|---|---|
| Brown Rice | 3.2 | 3.0 | 3.6 | 3.6 |
| Example 1 | 3.4 | 2.2 | 3.2 | 2.8 |
| Reference Example 2 | 3.3 | 2.8 | Below detection limit | Below detection limit |
| Reference Example 3 | 2.6 | 3.3 | Below detection limit | Below detection limit |

It can be seen that the fiber is substantially retained on the unmilled brown rice with all cooking methods. This is to be expected, since the bran layer is strongly bonded to the kernels of unmilled rice. It can also be seen that the rice of Example 1 according to the present invention also shows good retention of the fiber coating, even after cooking in excess water. On the other hand, the fiber layers of the reference examples are clearly removed by cooking in excess water.

The above example has been described for the purpose of illustration only. Many other examples falling within the scope of the accompanying claims will be apparent to the skilled reader.

## Claims

1. A cereal product comprising cereal kernels, wherein the cereal kernels have been at least partially milled and are coated with a coating layer **characterised in that** said coating layer comprises a protein matrix comprising whey proteins having particles of a dietary fiber ingredient dispersed therein, and said dietary fiber ingredient comprises powdered cereal bran.

2. A cereal product according to claim 1, wherein the coating layer comprises from 1wt.% to 3wt.% of protein, based on the dry weight of the coated cereal kernels.

3. A cereal product according to claim 1, wherein the coating layer comprises from 3wt.% to 10wt.% of said dietary fiber ingredient, based on the dry weight of the coated cereal kernels.

4. A cereal product according to any preceding claim, wherein the cereal kernels comprise milled rice kernels.

5. A cereal product according to any preceding claim, wherein the cereal product has a total moisture content of from 8wt.% to 15wt.%.

6. A cereal product according to any preceding claim, wherein the dietary fiber ingredient consists essentially of a powdered stabilized cereal bran.

7. A cereal product according to any preceding claim, wherein the cereal grains are rice grains and the total dietary fiber content of the product is from 1.6wt.% to 4wt.%.

8. A cereal product according to any preceding claim, wherein the dietary fiber ingredient consists essentially of said powdered cereal bran.

9. A cereal product according to any preceding claim, wherein the cereal grains are rice grains and the dietary fiber ingredient consists essentially of a powdered rice bran.

10. A cereal product according to any preceding claim, wherein the coating contains gamma-aminobutyric acid (GABA) in an amount sufficient to increase the GABA content of the product to at least 20mg/kg.

11. A method of making a fiber-enriched dry cereal product comprising the steps of:
coating cereal kernels that have been at least partially milled with particles of a powdered cereal bran and an aqueous dispersion containing a whey protein; followed by
drying the coated cereal kernels.

12. A method according to claim 11, comprising the steps of: providing dried milled cereal kernels; adding water with mixing to wet the dried milled cereal kernels; adding a powdered cereal bran with mixing to coat the wet cereal kernels, followed by coating the cereal kernels with the aqueous dispersion containing the whey protein and drying the coated cereal kernels.

13. A method according to claim 11 or claim 12 for the preparation of a product according to any of claims 1 to 10.

14. A sachet formed of liquid water-permeable sheet material and containing a cereal product according to any of claims 1 to 10.

## Patentansprüche

1. Getreideprodukt, umfassend Getreidekörner, wobei die Getreidekörner wenigstens teilweise gemahlen worden sind und mit einer Überzugsschicht überzogen sind, **dadurch gekennzeichnet, dass** die Überzugsschicht eine Proteinmatrix umfasst, die Molkeproteine mit darin dispergierten Partikeln eines Ballaststoffbestandteils umfasst, und der Ballaststoffbestandteil gepulverte Getreidekleie umfasst.

2. Getreideprodukt gemäß Anspruch 1, wobei die Überzugsschicht von 1 Gew.-% bis 3 Gew.-% an Protein bezogen auf das Trockengewicht der überzogenen Getreidekörner umfasst.

3. Getreideprodukt gemäß Anspruch 1, wobei die Überzugsschicht von 3 Gew.-% bis 10 Gew.-% an dem Ballaststoffbestandteil bezogen auf das Trockengewicht der überzogenen Getreidekörner umfasst.

4. Getreideprodukt gemäß einem der vorstehenden Ansprüche, wobei die Getreidekörner gemahlene Reiskörner umfassen.

5. Getreideprodukt gemäß einem der vorstehenden Ansprüche, wobei das Getreideprodukt einen Gesamtfeuchtegehalt von 8 Gew.-% bis 15 Gew.-% aufweist.

6. Getreideprodukt gemäß einem der vorstehenden Ansprüche, wobei der Ballaststoffbestandteil im Wesentlichen aus einer gepulverten stabilisierten Getreidekleie besteht.

7. Getreideprodukt gemäß einem der vorstehenden Ansprüche, wobei die Getreidekörner Reiskörner sind und der Gesamtballaststoffgehalt des Produkts von 1,6 Gew.-% bis 4 Gew.-% beträgt.

8. Getreideprodukt gemäß einem der vorstehenden Ansprüche, wobei der Ballaststoffbestandteil im Wesentlichen aus der gepulverten Getreidekleie besteht.

9. Getreideprodukt gemäß einem der vorstehenden Ansprüche, wobei die Getreidekörner Reiskörner sind und der Ballaststoffbestandteil im Wesentlichen aus einer gepulverten Getreidekleie besteht.

10. Getreideprodukt gemäß einem der vorstehenden Ansprüche, wobei der Überzug gamma-Aminobuttersäure (GABA) in einer Menge enthält, die ausreicht, um den GABA-Gehalt des Produkts auf wenigstens 20 mg/kg zu erhöhen.

11. Verfahren zum Herstellen eines ballaststoffangereicherten trockenen Getreideprodukts, umfassend die Schritte:
Überziehen von Getreidekörnern, die wenigstens teilweise gemahlen worden sind, mit Partikeln einer gepulverten Getreidekleie und einer wässrigen Dispersion, die ein Molkeprotein enthält; gefolgt von
Trocknen der überzogenen Getreidekörner.

12. Verfahren gemäß Anspruch 11, umfassend die Schritte: Bereitstellen von getrockneten gemahlenen Getreidekörnern; Zugeben von Wasser unter Mischen, um die getrockneten gemahlenen Getreidekörner zu benetzen; Zugeben einer gepulverten Getreidekleie unter Mischen, um die benetzten Getreidekörner zu überziehen, gefolgt von Überziehen der Getreidekörner mit der wässrigen Dispersion, die das Molkeprotein enthält, und Trocknen der überzogenen Getreidekörner.

13. Verfahren gemäß Anspruch 11 oder Anspruch 12 zum Herstellen eines Produkts gemäß einem der Ansprüche 1 bis 10.

14. Portionsbeutel, gebildet aus für flüssiges Wasser durchlässigem Bogenmaterial und enthaltend ein Getreideprodukt gemäß einem der Ansprüche 1 bis 10.

## Revendications

1. Produit de céréale comprenant des grains de céréale, dans lequel les grains de céréale ont été au moins partiellement moulus et sont enrobés avec une couche d'enrobage **caractérisée en ce que** ladite couche d'enrobage comprend une matrice protéique comprenant des protéines de lactosérum ayant des particules d'un ingrédient de fibre alimentaire dispersées dans celle-ci, et ledit ingrédient de fibre alimentaire comprend du son de céréale pulvérulent.

2. Produit de céréale selon la revendication 1, dans lequel la couche d'enrobage comprend de 1 % en poids à 3 % en poids de protéine, sur la base du poids sec des grains de céréale enrobés.

3. Produit de céréale selon la revendication 1, dans lequel la couche d'enrobage comprend de 3 % en poids à 10 % en poids dudit ingrédient de fibre alimentaire, sur la base du poids sec des grains de céréale enrobés.

4. Produit de céréale selon l'une quelconque des revendications précédentes, dans lequel les grains de céréale comprennent des grains de riz moulus.

5. Produit de céréale selon l'une quelconque des revendications précédentes, le produit de céréale ayant une teneur en eau totale de 8 % en poids à 15 % en poids.

6. Produit de céréale selon l'une quelconque des revendications précédentes, dans lequel l'ingrédient de fibre alimentaire est essentiellement constitué d'un son de céréale stabilisé pulvérulent.

7. Produit de céréale selon l'une quelconque des revendications précédentes, dans lequel les grains de céréale sont des grains de riz et la teneur totale en fibre alimentaire du produit est de 1,6 % en poids à 4 % en poids.

8. Produit de céréale selon l'une quelconque des revendications précédentes, dans lequel l'ingrédient de fibre alimentaire est essentiellement constitué dudit son de céréale pulvérulent.

9. Produit de céréale selon l'une quelconque des revendications précédentes, dans lequel les grains de céréale sont des grains de riz et l'ingrédient de fibre alimentaire est essentiellement constitué d'un son de riz pulvérulent.

10. Produit de céréale selon l'une quelconque des revendications précédentes, dans lequel l'enrobage contient de l'acide gamma-aminobutyrique (GABA) en une quantité suffisante pour augmenter la teneur en GABA du produit à au moins 20 mg/kg.

11. Procédé de fabrication d'un produit de céréale sec enrichi en fibres comprenant les étapes de :
enrobage de grains de céréale qui ont été au moins partiellement moulus avec des particules d'un son de céréale pulvérulent et une dispersion aqueuse contenant une protéine de lactosérum ; suivie par
le séchage des grains de céréale enrobés.

12. Procédé selon la revendication 11, comprenant les étapes de : fourniture de grains de céréale moulus séchés ; ajout d'eau avec mélange pour mouiller les grains de céréale moulus séchés ; ajout d'un son de céréale pulvérulent avec mélange pour enrober les grains de céréale humides, suivi par l'enrobage des grains de céréale avec la dispersion aqueuse contenant la protéine de lactosérum et le séchage des grains de céréale enrobés.

13. Procédé selon la revendication 11 ou la revendication 12 pour la préparation d'un produit selon l'une quelconque des revendications 1 à 10.

14. Sachet formé d'un matériau de feuille perméable à l'eau liquide et contenant un produit de céréale selon l'une quelconque des revendications 1 à 10.
